# EUROPEAN PATENT SPECIFICATION

(11) **EP 3 935 365 B1**
(45) Date of publication and mention of the grant of the patent: **01.05.2024**
(21) Application number: 20708016.9
(22) Date of filing: 05.03.2020
(51) Int. Cl.: G01N 1/30, G01N 1/31

(54) **RECEPTACLES FOR STAINING AND/OR RINSING SAMPLES AND METHODS OF THEIR USE**
BEHÀLTER ZUM FÄRBEN UND / ODER SPÜLEN VON PROBEN UND VERFAHREN ZU DEREN VERWENDUNG
RÉCIPIENTS POUR COLORER ET / OU RINCER DES ÉCHANTILLONS ET LEURS PROCÉDÉS D'UTILISATION

(30) Priority: 08.03.2019 US 201962815764 P
(43) Date of publication of application: 12.01.2022
(73) Proprietor: Samantree Medical SA, 1007 Lausanne (CH)
(72) Inventor: SHAFFER, Etienne, 1007 Lausanne (CH); HORISBERGER, Aurèle Timothée, 1022 Chavannes-Près-Renens (CH); SCHMITT, Frédéric, 1007 Lausanne (CH); RACHET, Bastien, 1007 Lausanne (CH)
(74) Representative: Graham Watt & Co LLP
(86) International application number: PCT/EP2020/055947
(87) International publication number: WO 2020/182634

(56) References cited:
- WO-A1-98/12534
- WO-A1-03/031065
- US-A- 2 837 055
- US-A1- 2012 053 484

## Description

### PRIORITY APPLICATION

### TECHNICAL FIELD

The disclosure relates generally to receptacles for use in staining and/or rinsing tissue samples and methods of staining tissue samples.

### BACKGROUND

Many modalities of microscopy use fluorescence to generate images. One example of a microscopy modality that typically uses fluorescence is confocal microscopy. Many samples that are desirable to image do not naturally fluoresce. For example, most biological samples are not naturally fluorescent. In order to utilize fluorescence for imaging such biological samples, the samples need to be stained with a staining agent solution. The staining agent solution tags the sample with a fluorophore. In order to stain the sample, the sample must be exposed to the staining agent solution for a period of time. Generally, a sample is placed into a container that includes staining agent solution and the sample is then coated with the solution to stain it. In some cases, a large bottle of staining agent solution is decanted into a smaller container (e.g., a beaker) that is then used to stain the sample. Such an approach is economical because it allows shipment of large volumes of staining agent solution in minimal packaging. However, such large bottles of staining agent solution are ill-suited for use in certain applications, such as in operating rooms, where more complex sample preparation procedures introduce risks to patients and users, such as from spillage of staining agent solution.

### SUMMARY

The present invention relates to receptacles for use in staining and/or rinsing samples prior to imaging. In some embodiments, a receptacle includes a container and a container top. A container may be sized and shaped to contain fluid (e.g., be partially filled with fluid) and a sample submerged in the fluid, without overflowing. The fluid may be, for example, staining agent solution or rinsing solution. In some embodiments, a receptacle includes a container and a basket that is positionable in the container. The basket may be used to easily submerge and retrieve a sample during a staining and/or rinsing process. A basket may include a permeable sample holding element that is permeable to fluid in a container so that samples can be sufficiently stained or rinsed. In some embodiments, a receptacle is a single-dose receptacle that is used intraoperatively (e.g., in an operating room).

In a first aspect the present invention is directed to a receptacle for preparing tissue samples using fluorescent staining agent solution and/or rinsing solution, the receptacle comprising: a container having a proximal end and a distal end, the container comprising a container opening at the proximal end and a bottom at the distal end; and a removal basket that is postionable in the container, wherein the basket has a proximal end and a distal end and the basket comprises a permeable sample holding element disposed at the distal end, wherein the permeable sample holding element (i) comprises one or more side walls and a bottom, and a sample submersion retention element, the sample retention element disposed between the proximal end and the distal end of the basket, wherein the sample retention element is hinged or tensioned to the permeable sample holding element to provide an opening on the proximal side of the sample holding element or wherein the permeable sample holding element has a vertical opening on a side of the sample holding element, and (ii) is constructed to position a tissue sample in contact with a fluid disposed within the container at or near the distal end of the container when the basket is positioned in the container, wherein the container opening has an opening inner diameter of at least 5 mm and no more than 150 mm, wherein the container has a size and shape that defines a fillable volume, wherein the fillable volume is in a range from 5 mL to 750 mL.

In certain embodiments, the container has at least one of (i) an inner diameter in a range from 10 mm to 100 mm [e.g., from 10 mm to 60 mm (e.g., from 10 mm to 30 mm or from 40 mm to 60 mm) or from 40 mm to 100 mm (e.g., from 50 mm to 75 mm or from 75 mm to 100 mm)] (e.g., wherein the inner diameter is substantially constant) and (ii) an interior depth from the container opening to the bottom in a range from 5 mm to 120 mm (e.g., from 10 mm to 20 mm or from 30 mm to 50 mm or from 50 mm to 80 mm or from 80 mm to 120 mm).

In certain embodiments, the fillable volume is in a range from 5 mL to 100 mL (e.g., in a range from 5 mL to 25 mL, from 10 mL to 25 mL, or from 25 mL to 50 mL). In certain embodiments, the fillable volume is in a range from 100 mL to 750 mL (e.g., in a range from 100 mL to 250 mL or 250 mL to 500 mL or from 500 mL to 750 mL).

In certain embodiments, the receptacle is a single-dose receptacle (e.g., is disposable).

In certain embodiments, the container is partially filled with staining agent solution and the fillable volume is no more than 60% (e.g., no more than 50%, no more than 40%, no more than 35%, no more than 30%, or no more than 25%) and at least 10% (e.g., at least 20%) filled with the staining agent solution (e.g., and is sealed). In certain embodiments, a tissue sample (e.g., a fresh resected tissue sample, optionally fresh resected breast or skin tissue) having a volume of at least 2 mL and no more than 300 mL (e.g., at least 2 mL and no more than 8 mL or at least 100 mL and no more than 300 mL) is disposed entirely within the container (e.g., and wherein the fillable volume is not entirely filled by the tissue sample and the staining agent solution). In certain embodiments, the tissue sample is submerged in the staining agent solution. In certain embodiments, the staining agent solution is sterilized.

In certain embodiments, the container is partially filled with rinsing solution and the fillable volume is no more than 60% (e.g., no more than 50%, no more than 40%, no more than 35%, no more than 30%, or no more than 25%) and at least 10% (e.g., at least 20%) filled with the rinsing solution (e.g., and is sealed). In certain embodiments, a tissue sample (e.g., a fresh resected tissue sample, optionally fresh resected breast or skin tissue) having a volume of at least 2 mL and no more than 300 mL (e.g., at least 2 mL and no more than 8 mL or at least 100 mL and no more than 300 mL) is disposed entirely within the container (e.g., and wherein the fillable volume is not entirely filled by the tissue sample and the rinsing solution). In certain embodiments, the tissue sample is submerged in the rinsing solution. In certain embodiments, the rinsing solution is sterilized.

In certain embodiments, the receptacle comprises a removable basket that is positionable in the container (e.g., at least partially within the container), wherein the basket has a proximal end and a distal end and the basket comprises a permeable sample holding element (e.g., a mesh or porous element) disposed at the distal end, wherein the permeable sample holding element (i) comprises one or more side walls and a bottom, and (ii) is constructed to position a tissue sample in contact with a fluid disposed within the container (e.g., a staining agent solution or rinsing solution) at or near the distal end of the container when the basket is positioned in the container.

In certain embodiments, the basket comprises one or more manipulation elements [e.g., one or more handles (e.g., a hooked handle) or one or more tabs (e.g., an extension or protrusion) (e.g., a curved tab)] disposed at the proximal end of the basket. In certain embodiments, each of the one or more manipulation elements protrudes above the container opening when the basket is positioned in the container.

In certain embodiments, one or more of (i) the one or more side walls and (ii) the bottom is mesh or porous. In certain embodiments, the permeable sample holding element comprises a sample submersion retention element (e.g., a mesh or porous element) disposed between the proximal end and the distal end of the basket. In certain embodiments, the sample submersion retention element is substantially parallel to the bottom of the container when the basket is positioned in the container. According to the present invention the sample retention element is hinged or tensioned to the permeable sample holding element to provide an opening on the proximal side of the sample holding element or wherein the permeable sample holding element has a vertical opening (e.g., in one of the one or more side walls) constructed so that a sample can be removably disposed in the permeable sample holding element through the vertically oriented opening. In certain embodiments, the permeable sample holding element comprises a sample retention lip extending upward from the bottom of the permeable sample holding element (e.g., and the sample retention lip defines a portion of the vertically oriented opening).

In certain embodiments, the basket is a single continuous piece of material (e.g., has been injection molded).

In certain embodiments, the container comprises a basket retention lip at the proximal end (e.g., near the container opening) and the basket comprises a corresponding positioning rim so that, when the basket is positioned in the container, the positioning rim of the basket rests on the basket retention lip.

In certain embodiments, the receptacle comprises a container top (e.g., a rigid or semi-rigid removable lid) sealed to the proximal end of the container at the container opening. In certain embodiments, the container top is constructed to indicate to a user whether the container top has previously been removed from the container at least once.

In certain embodiments, the container is opaque (e.g., and the container top is opaque).

In certain embodiments, the receptacle can be autoclaved. In certain embodiments, the container consists essentially of plastic (i.e., does not comprise glass).

In another aspect, the present invention is directed to a method of staining a sample, the method comprising: providing a tissue sample; providing a receptacle, the receptacle comprising a container no more than 60% filled with staining agent solution; submerging the tissue sample in the staining agent solution in the container for a period of time (e.g., at least 10 seconds and no more than 1 minute), thereby staining the tissue sample [e.g., by staining a surface layer of the tissue sample (e.g., to a penetration depth in a range of 0.05 mm to 1 mm)]; and removing the tissue sample from the The method of the present invention is defined in claim 12.

In certain embodiments, the tissue sample is a freshly resected tissue sample. In certain embodiments, the method is performed in an operating room. In certain embodiments, the method is performed intraoperatively.

In certain embodiments, the receptacle comprises a removable basket and the method comprises: placing the tissue sample in the basket; and positioning the basket in the container thereby submerging the tissue sample in the staining agent solution.

In certain embodiments, a sample submersion retention element of the basket prevents the tissue sample from surfacing in the staining agent solution during the submerging.

In certain embodiments, the method comprises providing a second receptacle comprising a second container no more than 60% (e.g., no more than 50% or no more than 40%) (e.g., and no less than 10%) filled with rinsing solution (e.g., a saline solution); removing the basket from the receptacle; positioning the basket in the second container thereby submerging the tissue sample in the rinsing solution; and removing the basket from the second container after a period of time of no more than 30 seconds (e.g., no more than 15 seconds or no more than 10 seconds).

In certain embodiments, the method comprises unsealing a container top from the container prior to disposing the tissue sample in the container (e.g., and comprising unsealing a container top of the second receptacle from the container of the second receptacle).

In certain embodiments, the tissue sample has a volume of at least 2 mL and no more than 300 mL (e.g., at least 2 mL and no more than 8 mL or at least 100 mL and no more than 300 mL) and the volume of staining agent solution in the container is at least 3 mL and no more than 300 mL.

In certain embodiments, the method comprises autoclaving the receptacle (e.g., and the staining agent solution) before submerging the tissue sample.

In certain embodiments, the method comprises imaging the tissue sample after the staining. In certain embodiments, the sample is not fixed prior to imaging.

In certain embodiments, the receptacle is a receptacle disclosed herein.

Also disclosed is a receptacle kit comprising: a first receptacle that is a receptacle disclosed herein, wherein the fillable volume of the container of the first receptacle is no more than 60% (e.g., no more than 50% or no more than 40%) (e.g., and no less than 10%) filled with staining agent solution; and a second receptacle that is a receptacle disclosed herein, wherein the fillable volume of the container of the second receptacle is no more than 60% (e.g., and no less than 10%) filled with rinsing solution The kit is not part of the present invention.

### DEFINITIONS

In order for the present disclosure to be more readily understood, certain terms used herein are defined below. Additional definitions for the following terms and other terms may be set forth throughout the specification.

In this application, unless otherwise clear from context or otherwise explicitly stated, (i) the term "a" may be understood to mean "at least one"; (ii) the term "or" may be understood to mean "and/or"; (iii) the terms "comprising" and "including" may be understood to encompass itemized components or steps whether presented by themselves or together with one or more additional components or steps; (iv) the terms "about" and "approximately" may be understood to permit standard variation as would be understood by those of ordinary skill in the relevant art; and (v) where ranges are provided, endpoints are included. In certain embodiments, the term "approximately" or "about" refers to a range of values that fall within 25%, 20%, 19%, 18%, 17%, 16%, 15%, 14%, 13%, 12%, 11%, 10%, 9%, 8%, 7%, 6%, 5%, 4%, 3%, 2%, 1%, or less in either direction (greater than or less than) of the stated reference value unless otherwise stated or otherwise evident from the context (except where such number would exceed 100% of a possible value).

*Sample:* As used herein, a sample is biological matter capable of being stained. In some embodiments, a sample is a tissue sample. For example a sample may be a resected tissue sample. A resected tissue sample may be a fresh tissue sample (e.g., resected during an operation). For example, a sample may be freshly resected breast or skin tissue. In some embodiments, a sample is stained with a staining agent solution. A staining agent solution comprise a fluorescent tag such that it fluorescently stains a sample. Where embodiments are described as using a tissue sample, it is understood that analogous embodiments exist where the sample is a non-tissue sample and *vice versa.*

***User:*** As used herein, a user is any person who uses an imaging system disclosed herein. A user may be, for example, but not limited to, a surgeon, a surgical staff (e.g., a nurse or medical practitioner in an operating room), a lab technician, a scientist, or a pathologist. It is understood that when an action is described as being performed by a surgeon, in some embodiments, a user who is not a surgeon performs an equivalent function.

### BRIEF DESCRIPTION OF THE DRAWINGS

Drawings are presented herein for illustration purposes, not for limitation. The foregoing and other objects, aspects, features, and advantages of the disclosure will become more apparent and may be better understood by referring to the following description taken in conjunction with the accompanying drawings, in which:
Fig. 1A is a cross section of a receptacle, according to illustrative embodiments of the present disclosure;
Fig. 1B is a cross section of the receptacle of Fig. 1A after the lid has been removed from the container and a sample has been disposed entirely within the container, according to illustrative embodiments of the present disclosure;
Fig. 2A is a view of a receptacle comprising a basket for handling a sample, according to illustrative embodiments of the present disclosure;
Fig. 2B is a view of the receptacle of Fig. 2A during staining of a sample, according to illustrative embodiments of the present disclosure;
Fig. 3A is a view of a receptacle comprising a basket, according to illustrative embodiments of the present disclosure;
Fig. 3B is a view of the receptacle of Fig. 3A during staining of a sample, according to illustrative embodiments of the present disclosure;
Figs. 4A, 4B, and 4C are views of receptacles that each include a basket useful for buoyant (e.g., fatty) samples, according to illustrative embodiments of the present disclosure;
Fig. 4D is a view of the receptacle of Fig. 4C during removal of the basket, according to illustrative embodiments of the present disclosure;
Fig. 5 is a flow diagram of a method for staining a sample using a receptacle, according to illustrative embodiments of the present disclosure;
Fig. 6A shows a fluorescently stained biological sample disposed on an imaging system, according to illustrative embodiments of the disclosure;
Fig. 6B shows a full view of the imaging system of Fig. 6A, according to illustrative embodiments of the disclosure; and
Fig. 7 is a flow diagram of a method for intraoperative imaging, according to illustrative embodiments of the disclosure.

### DETAILED DESCRIPTION OF CERTAIN EMBODIMENTS

It is contemplated that the receptacles and methods of the claimed invention encompass variations and adaptations developed using information from the embodiments described herein.

Headers are provided for the convenience of the reader and are not limiting with respect to the claimed subject matter. Nothing written herein, including the Background section, is an admission that what is written is prior art unless expressly stated otherwise.

### Receptacles and Components Thereof

In some embodiments, a receptacle comprises a container for holding staining agent solution and/or rinsing solution. A container has an opening to allow samples to be inserted and removed to stain or rinse them (depending on whether the container is holding staining agent solution or rinsing solution, respectively). In some embodiments, a container opening, through which samples are inserted and removed, that has an opening inner diameter (e.g., measured from inner surface(s) of the container) of at least 5 mm (e.g., at least 10 mm) and no more than 150 mm (e.g., no more than 100). In some embodiments, the container has a size and shape that defines a fillable volume, wherein the fillable volume is in a range from 5 mL to 750 mL. A container has a (non-permeable) bottom and one or more (non-permeable) side walls that define its fillable volume.

A receptacle may include a container top that covers the container when it is not in use. A container top may be a rigid or semi-rigid removable lid. A container top may removably attach to a container in any of a number of ways, such as through, for example, threads, snaps (e.g., pressured tabs), tension seals, or adhesives.

In some embodiments, a container has an inner diameter in a range from 10 mm to 100 mm [e.g., from 10 mm to 60 mm (e.g., from 10 mm to 30 mm or from 40 mm to 60 mm) or from 40 mm to 100 mm (e.g., from 50 mm to 75 mm or from 75 mm to 100 mm)]. A container may have a constant cross section. That is, a container may have inner diameter that is substantially constant (e.g., within manufacturing tolerances). For example, a container may be a hollow cylinder having an opening at one end and a solid bottom at an opposite end. In some embodiments, a container has a polygonal (e.g., triangular or rectangular (e.g., square) cross section instead of a circular cross section. In some embodiments, a container has an inner diameter that is larger than an opening (e.g., if the container widens towards its end distal to its opening). When a container has a polygonal cross section (e.g., a substantially constant polygonal cross section), an inner diameter of the container is the diameter of the incircle of the polygon. In some embodiments, a container has an interior depth from the container opening to the bottom in a range from 5 mm to 120 mm (e.g., from 10 mm to 20 mm or from 30 mm to 50 mm or from 50 mm to 80 mm or from 80 mm to 120 mm).

Staining a sample (e.g., a tissue sample) can be performed by submerging (e.g., immersing) the sample into staining agent solution. Likewise, rinsing a sample can be performed by submerging (e.g., immersing) the sample into rinsing solution. Submerging a sample (e.g., in staining agent solution or rinsing solution) can reduce the amount of time necessary to complete staining and/or ensure an even stain across an entire sample surface (e.g., when compared to using a series of partial surface stains that can be achieved by merely dipping the sample). In some embodiments, a sample is disposed entirely within a container during staining and/or rinsing. In some embodiments, a container is sized and shaped to accommodate a sample submerged in a fluid (e.g., staining agent solution or rinsing solution) that partially fills the container. Appropriately only partially filling the container prevents overflow. Therefore, there is a balance between providing sufficient solution in a container to submerge a typically sized sample in the solution and leaving enough unfilled volume so that the container does not overflow when the sample is submerged. This balance can be accomplished, for example, by a combination of a size of a fillable volume of a container and an amount of fluid (e.g., staining agent solution or rinsing solution) prefilled in the container.

By way of non-limiting examples, sizes and prefill amounts of can be different for different types of samples. As one example, typical resected breast cancer tissue samples (e.g., from a lumpectomy) that are to be stained for imaging (e.g., intraoperatively) can be relatively large, e.g., Ø 30 mm × 30 mm or Ø 80 mm × 50 mm (or a size therebetween). Such samples (of Ø 30 mm × 30 mm or Ø 80 mm × 50 mm size) can be used with a container having an inner diameter (and opening inner diameter) of 90 mm and an interior depth of 90 mm prefilled with 250 mL of staining agent solution to sufficiently staining the sample by submersion without overflow. In some embodiments, a container having an inner diameter and 90 mm and an interior depth of 90 mm prefilled with 250 mL of staining agent solution is useful as a single-dose receptacle for a wide range of typical sample sizes (e.g., those mentioned previously in this paragraph or in the following paragraph). Over the range of acceptable sample sizes, there is sufficient staining agent in such a container to fully submerge the sample without overflowing when the sample is submerged. Additionally, such a container is not substantially larger than needed to accommodate the largest typical sample sizes, thereby conserving staining agent solution (and/or rinsing solution) and consequently reducing costs and/or logistical considerations (e.g., shipping and storage).

As another example, typical skin cancer tissue samples (e.g., from biopsies) are relatively smaller, e.g., Ø 15 mm × 5 mm or Ø 40 mm × 5 mm (or a size therebetween). A sample of Ø 15 mm × 5 mm size can be used with a container having an inner diameter (and opening inner diameter) of 30 mm and an interior depth of 15 mm prefilled with 5 mL of staining agent solution to sufficiently staining the sample by submersion without overflow. A sample of Ø 40 mm × 5 mm size can be used with a container having an inner diameter (and opening inner diameter) of 50 mm and an interior depth of 15 mm prefilled with 10 mL (or even as little as 5 mL) of staining agent solution to sufficiently staining the sample by submersion without overflow. A sample of Ø 15 mm × 5 mm size can also be used with a container having an inner diameter (and opening inner diameter) of 50 mm and an interior depth of 15 mm prefilled with 10 mL of staining agent solution to sufficiently staining the sample by submersion without overflow.

In some embodiments, a container is partially (i.e., not entirely) prefilled with fluid (e.g., staining agent solution and/or rinsing solution). In some embodiments, a container has a fillable volume in a range from 5 mL to 100 mL (e.g., in a range from 5 mL to 25 mL or from 25 mL to 50 mL). Such a container may be well-suited for small samples, such as resected skin tissue samples. Use of a smaller container for smaller samples allows staining agent solution to be conserved. Conserving staining agent solution can lower costs of procedures when used intraoperatively. In some embodiments, a container has a fillable volume in a range from 100 mL to 750 mL (e.g., in a range from 100 mL to 250 mL or from 250 mL to 500 mL or from 500 mL to 750 mL). Use of such a container may be well-suited for larger samples, such as resected breast tissue samples. In some embodiments, a receptacle includes a container that is prefilled with one of staining agent solution and rinsing solution and is sealed, at least in part, with a container top. The receptacle may further include a basket.

Using containers prefilled with staining agent solution or rinsing solution can have advantages. In some embodiments, using a prefilled container (e.g., in a single-dose receptacle) has one or more of the following advantages: (1) it reduces the risk of a user contacting or spilling the prefilled fluid (e.g., staining agent solution, which can be toxic), (2) it ensures that the container is sized and shaped to accept the anticipated sample size (e.g., based on the surgical procedure being performed) and (3) it reduces the number of steps to be performed by the user (e.g., by eliminating the need to decant solution), thereby saving time and/or reducing or eliminating the risk of errors by the user during sample preparation. A hospital (or other facility) may need to stock only a limited number of differently sized receptacles prefilled with fluids to be able to accommodate all typical sample sizes (e.g., for a given type or set of procedures during which imaging is to be performed). For example, a hospital may be able to fill all expected needs with only two or three or four different prefilled container sizes.

In some embodiments, a container is partially filled with staining agent solution and its fillable volume is no more than 60% (e.g., no more than 50%, no more than 40%, no more than 35%, no more than 30%, or no more than 25%) filled with the staining agent solution. In some embodiments, the container is at least 10% (e.g., at least 20%) filled with the staining agent solution. In some embodiments, a tissue sample (e.g., a fresh resected tissue sample, optionally fresh resected breast or skin tissue) having a volume of at least 2 mL and no more than 300 mL (e.g., at least 2 mL and no more than 8 mL or at least 100 mL and no more than 300 mL) is disposed entirely within the container. In some embodiments, the fillable volume is not entirely filled by the tissue sample and the staining agent solution. In some embodiments, the tissue sample is submerged in the staining agent solution. In some embodiments, the staining agent solution has been sterilized (prior to contact with the sample).

In some embodiments, a container is partially filled with rinsing solution and its fillable volume is no more than 60% (e.g., no more than 50%, no more than 40%, no more than 35%, no more than 30%, or no more than 25%) filled with the rinsing solution. In some embodiments, the container is at least 10% (e.g., at least 20%) filled with the rinsing solution. In some embodiments, a tissue sample (e.g., a fresh resected tissue sample, optionally fresh resected breast or skin tissue) having a volume of at least 2 mL and no more than 300 mL (e.g., at least 2 mL and no more than 8 mL or at least 100 mL and no more than 300 mL) is disposed entirely within the container. In some embodiments, the fillable volume is not entirely filled by the tissue sample and the rinsing solution. In some embodiments, the tissue sample is submerged in the rinsing solution. In some embodiments, the rinsing solution has been sterilized (prior to contact with the sample).

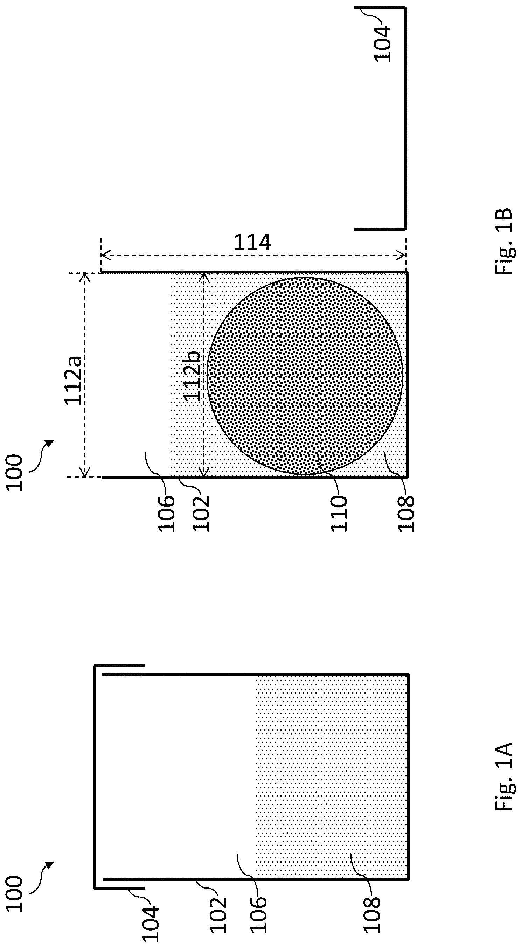

Figs. 1A and 1B show an illustrative receptacle **100.** Receptacle **100** includes container **102** and container top **104.** Container **102** has a fillable volume **106** that is partially (e.g., no more than 60%) filled with staining agent solution **108.** In some embodiments, container **102** is alternatively filled with rinsing solution (e.g., a saline solution). Referring specifically to Fig. 1B, container top **104** has been removed from container **102.** Sample **110** has been inserted into container **102.** Because container **102** is appropriately sized and shaped relative to the amount of staining agent solution **108** that it was partially filled with prior to insertion of sample **110,** sample **110** can be submerged in staining agent solution **108** without spilling any of staining agent solution **108** outside of container **102.** Sample **110** is disposed entirely within container **102.** Container **102** includes an opening with an opening inner diameter **112a.** Container **102** has an inner diameter **112b.** In this example, opening inner diameter **112a** and inner diameter **112b** are the same. In some embodiments, an inner diameter of a container is larger than an opening inner diameter of the container. Container **102** has a circular cross section that is substantially constant in inner diameter. Container **102** has an interior depth **114.**

In some embodiments, a receptacle (e.g., a container and/or container top) is opaque. For example, a receptacle may transmit no more than 25% (e.g., no more than 20%, no more than 10%, or no more than 5%) of incident light from outside the receptacle to a fluid (e.g., staining agent solution) disposed therein. Opaque receptacles can preserve staining agent solution (e.g., increase useable lifetime or better maintain fluorescence intensity of the solution) by reducing or eliminating optically induced degradation of one or more fluorophores in the staining agent solution.

In some embodiments, a receptacle is a single-dose receptacle (e.g., is disposable). A single-dose receptacle is prefilled with a volume of fluid (e.g., staining agent solution or rinsing solution). Single-dose receptacles can be useful, for example, in hospital settings where inventory tracking is important (e.g., for patient health outcomes and/or simple invoicing). Labelling receptacles (e.g., on their containers) with batch numbers and/or expiry date may also be useful in this regard. Single-dose receptacles are also preferable, in certain applications, because they can be more sanitary. For example, a single-dose receptacle can be disposed of after use without superfluously wasting material. In some embodiments, a single-dose receptacle is disposed of (trashed) after use. In some embodiments, a single-dose receptacle may be re-closed after use to minimize risks of spillage and contamination when disposed of. In some embodiments, a single-dose receptacle is emptied and resterilized (e.g., by an autoclave) after use before being refilled.

In some embodiments, a receptacle comprises a container top (e.g., a rigid or semi-rigid removable lid) sealed to a container at (e.g., near) its container opening. In some embodiments, a container top is constructed to indicate to a user whether the container top has previously been removed from its container at least once. For example, a container top may have a visual indicator that changes upon unsealing (e.g., opening) of the container. In some embodiments, a container top or portion thereof changes colors upon unsealing. In some embodiments, text on a seal on a container top or readability of the text changes upon unsealing. For example, a container top may be unavoidably damaged or altered in some way upon opening. For example, a container top may require it be punctured, cut, or torn in order to gain access to the fluid inside the receptacle. In some embodiments, a container top is tamper-evident, for example as in a soda or water bottle cap. In some embodiments, a container top cannot be replaced on a receptacle after it has been removed once (e.g., due to damage caused during the initial opening).

In some embodiments, a receptacle comprises plastic (e.g., high density polyethylene). In some embodiments, a container comprises plastic (e.g., high density polyethylene). In some embodiments, a receptacle consists essentially of plastic. In some embodiments, a container consists essentially of plastic. In some embodiments, a container does not comprise glass. In some embodiments, a receptacle does not comprise glass. By eliminating glass from a container or receptacle, risks associated with use (e.g., intraoperatively) such as breakage (and resulting spillage), including risk of cuts or from broken glass, are mitigated. Such risks can be especially important to avoid in locations like operating rooms (e.g., when used intraoperatively) where a cut to a user can seriously compromise patient health more so than in other locations.

In some applications it is preferable that the staining agent solution (and/or rinsing solution) is sterile. One convenient way to sterilize a staining agent solution is with heat. For example, a staining agent solution may be able to be sterilized by heating the staining agent solution for a period of time (e.g., in an autoclave). In some embodiments, a receptacle can be sterilized to provide a sterile environment for staining agent solution. In some embodiments, a receptacle can be autoclaved to sterilize it. A receptacle that can be autoclaved may be made from a plastic with a high melting temperature (e.g., above 120 °C) and having sufficient thicknesses (e.g., of a container and/or container top) to not appreciably deform or leech material during the autoclave process. In some embodiments, a staining agent solution is sterilized prior to being added to a receptacle. In some embodiments, a staining agent solution is sterilized in a receptacle (i.e., after the receptacle is partially filled by the staining agent solution).

In some embodiments, a receptacle includes a container and a removable basket that is positionable in the container. A removable basket may be positionable at least partially within a container. In some embodiments a removable basket is positionable fully within a container. In some embodiments, a removable basket is provided positioned fully within a container that is sealed (e.g., with a tamper-evident container top). In some embodiments, a basket includes a permeable sample holding element at one end that is sized and shaped to accommodate a sample (e.g., within a range of volumes). A permeable sample holding element is permeable to staining agent solution and/or rinsing solution. For example, a sample holding element may be a mesh or porous element. A permeable sample holding element includes a bottom and one or more side walls that may each separately be mesh or porous. Generally, larger mesh spacing or pore size is preferable for staining tissue samples.

A basket may include one or more manipulation elements [e.g., one or more handles (e.g., a hooked handle) or one or more tabs (e.g., an extension or protrusion) (e.g., a curved tab)] disposed at an end of the basket opposite a permeable sample holding element to assist a user in positioning the basket in a container by providing one or more locations to easily grip the basket. In some embodiments, a permeable sample holding element of a basket includes a sample submersion retention element to retain samples in a submerged state during staining and/or rinsing. For example, some tissue samples have a high fat content and will naturally float in a fluid (e.g., a staining agent solution or rinsing solution) unless retained under the fluid surface by a sample submersion retention element. The presence of such an element eliminates the need for a user to hold the sample down, for example with a gloved hand or tool. A sample submersion retention element may be, but is not necessarily, mesh or porous.

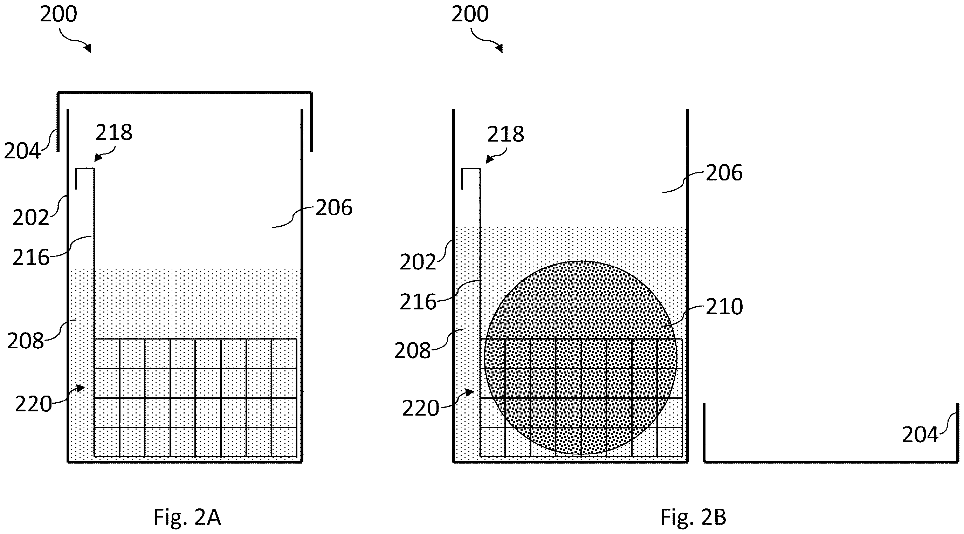

Referring to Figs. 2A and 2B, an illustrative receptacle **200** includes a container **202,** a container top **204,** and a basket **216.** Container **202** has a fillable volume **206** that is partially filled with staining agent solution **208.** Container top **204** is sealed to container **202.** Basket **216** is positioned entirely within container **202.** Basket **216** includes permeable sample holding element **220** at its distal end. Holding element **220** is a mesh element including a bottom and one or more side walls, but not having a top (i.e., not including a sample submersion retention element). Basket **216** also includes one manipulation element **218.** Manipulation element **218** is a hooked handle. In this example, the hooked handle can be hooked around an edge of the opening of container **202** if desired. Referring specifically to Fig. 2B, container top **204** has been removed from container **202** (i.e., the seal has been broken). Basket **216** was removed from container **202** to dispose sample **210** in permeable sample holding element **220** and repositioned in container **202.** When positioned in container **202,** basket **216** submerges sample **210** in staining agent solution **208,** thereby staining it. Sample **210** protrudes above the top of permeable sample holding element **220.**

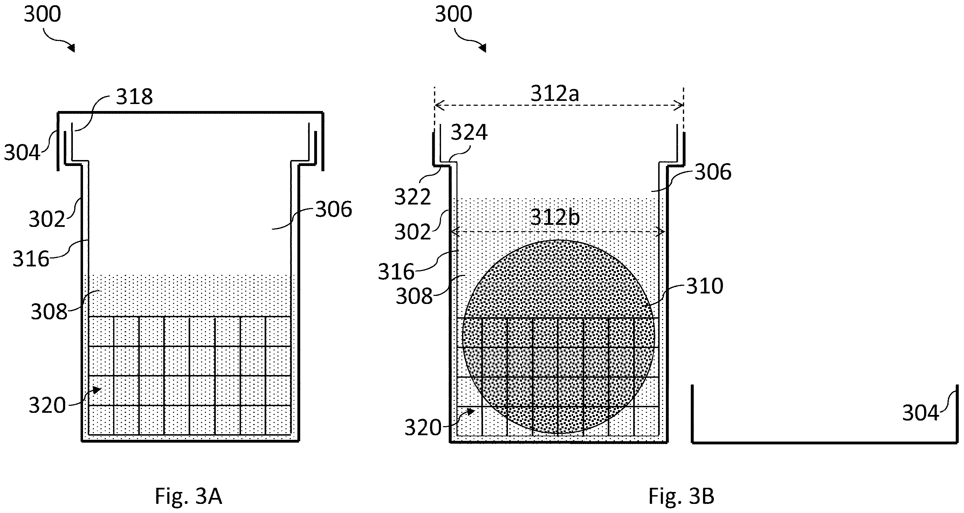

Referring to Figs. 3A and 3B, an illustrative receptacle **300** includes a container **302,** a container top **304,** and a basket **316.** Container **302** has a fillable volume **306** that is partially filled with staining agent solution **308.** Container top **304** is sealed to container **302.** Container **302** has an opening with opening inner diameter **312a** that is larger than an inner diameter **312b** of container **302.** Basket **316** includes permeable sample holding element **320** at its distal end. Holding element **320** is a mesh element including a bottom and one or more side walls, but not having a top (i.e., not including a sample submersion retention element). Basket **316** also includes two manipulation elements **318,** in this case tabs. Manipulation elements **318** protrude above container **302** when basket **316** is positioned in container **302.** Container **302** includes basket retention lip **322** and basket **316** includes a corresponding positioning rim **324** that together are used to position basket **316** in container **302.** When basket **316** is positioned in container **302,** positioning rim **324** rests on basket retention lip **322.** Basket **316** may be constructed so that when positioning rim **324** rests on basket retention lip **322,** the bottom of permeable sample holding element **320** is maintained above the bottom of container **302.** Referring specifically to Fig. 3B, container top **304** has been removed from container **302** (i.e., the seal has been broken). Basket **316** was removed from container **302** to dispose sample **310** in permeable sample holding element **320** and repositioned in container **302.** When positioned in container **302,** basket **316** submerges sample **310** in staining agent solution **308,** thereby staining it. Sample **310** protrudes above the top of permeable sample holding element **320.**

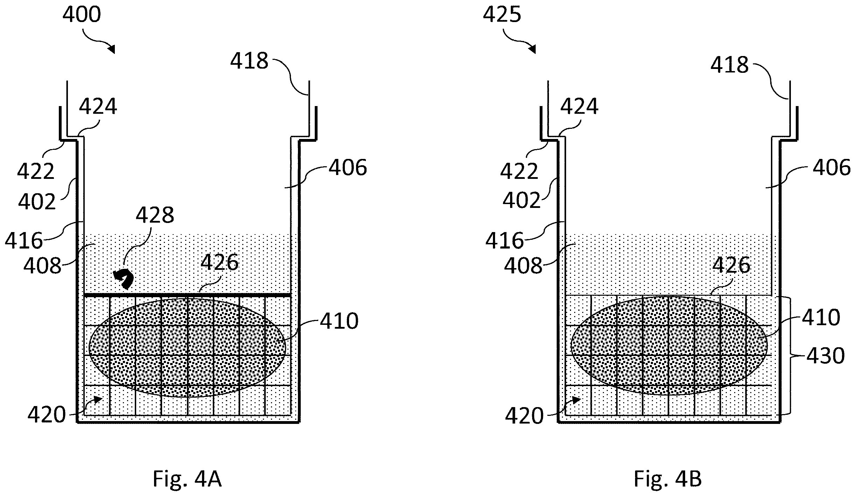

Figs. 4A and 4B illustrate embodiments of receptacles that include basket that includes a permeable sample holding element that includes a sample submersion retention element (e.g., a mesh or porous element). The sample submersion retention elements are disposed between a proximal and distal end of their respective basket.

Referring now to Fig. 4A, an illustrative receptacle **400** includes a container **402,** a container top **404,** and a basket **416.** Container **402** has a fillable volume **406** that is partially filled with staining agent solution **408.** Basket **416** includes permeable sample holding element **420** at its distal end. Holding element **420** is a mesh element that includes a bottom and one or more side walls. Basket **416** also includes two manipulation elements **418,** in this case tabs, that protrude above container **402.** Container **402** includes basket retention lip **422** and basket **416** includes a corresponding positioning rim **424** that together are used to position basket **416** in container **402.** Permeable sample holding element **420** includes sample submersion retention element **426.** As tissue sample **410** has low density (e.g., due to a high fat content), it would normally float in staining agent solution **408** were it not for sample submersion retention element **426.** Sample submersion retention element **426** is hinged (as indicated by arrow **428**) such that it can be opened to dispose sample **410** in permeable sample holding element **420** (and then closed prior to staining). In some embodiments, a sample submersion retention element is tensioned, for example to a perimeter of a permeable sample holding element (e.g., in addition to being hinged). In some embodiments, a sample submersion retention element is substantially parallel to the bottom of a container (e.g., as shown in Fig. 4A for sample submersion retention element **426** and container **402**).

Referring to Fig. 4B, illustrative receptacle **425** also includes a sample submersion retention element **426** (e.g., a solid, mesh, or porous element). However, unlike Fig. 4A, sample submersion retention element **426** of receptacle **425** is fixed in its position (e.g., is not hinged). In order to dispose sample **410** in permeable sample holding element **420,** vertically oriented opening **430** is provided. When basket **416** is removed from container **402,** sample **410** can be inserted in or removed from permeable sample holding element **420** through vertically oriented opening **430** (e.g., prior to or after staining or prior to or after rinsing).

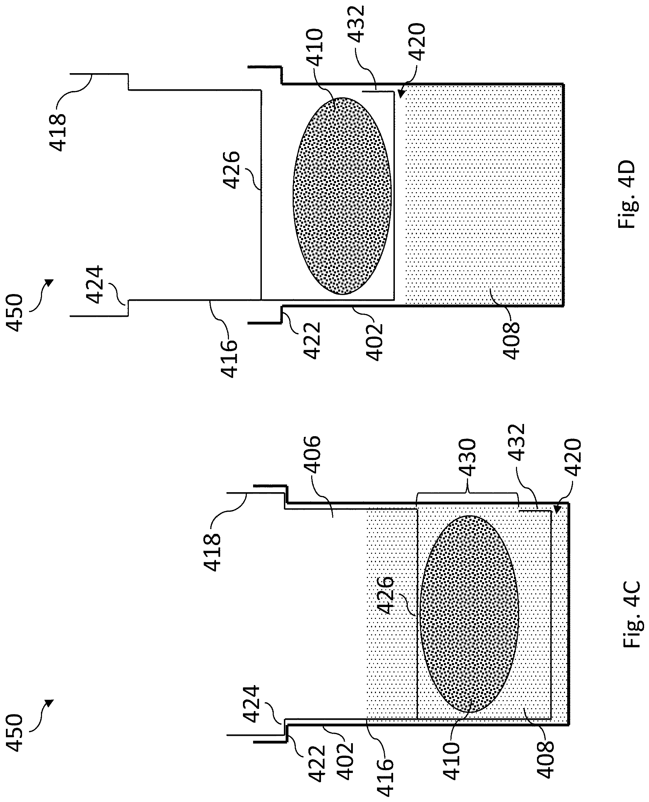

Referring to Figs. 4C and 4D, an illustrative receptacle **450** includes a container **402,** a container top **404,** and a basket **416.** Container **402** has a fillable volume **406** that is partially filled with staining agent solution **408.** Basket **416** includes permeable sample holding element **420** at its distal end. Basket **416** also includes two manipulation elements **418,** in this case tabs, that protrude above container **402.** Container **402** includes basket retention lip **422** and basket **416** includes a corresponding positioning rim **424** that together are used to position basket **416** in container **402.** Holding element **420** includes a bottom and one side wall. The bottom is mesh or porous (but is not necessarily so).

Referring still to Figs. 4C and 4D, holding element **420** includes sample submersion retention element **426,** vertically oriented opening **430,** and sample retention lip **432** extending upward from its bottom. As Fig. 4C is a cross section so sample retention lip **432** appears only on the right side of Fig. 4C, but it is understood that sample retention lip **432** is disposed around the perimeter of permeable sample holding element **420** not occupied by the one side wall (and is in contact with the side wall). In some embodiments, a vertically oriented opening is disposed only on one side of a permeable sample holding element or in only a portion of one side of a permeable sample holding element (e.g., like an open window on a wall). Sample retention lip **432** defines a portion of vertically oriented opening **430.** Because permeable sample holding element **420** has a large vertically oriented opening, sample retention or removal is easy. As sample **410** has low density (e.g., due to a high fat content), it would normally float in staining agent solution **408** were it not for sample submersion retention element **426.** Instead, sample **410** is retained in a submerged state by sample submersion retention element **426.** Sample submersion retention element **426** has a fixed position (e.g., is not hinged or otherwise openable).

Referring to Fig. 4C, even though sample **410** is buoyant in staining agent solution **408,** sample **410** is held within permeable sample holding element **420.** Sample **410** is retained in part because the perimeter of permeable sample holding element **420** corresponds to the perimeter of container **402.** (Sample retention lip **432** may also contribute to retaining sample **410** within permeable sample holding element **420.**) In some embodiments, an outer perimeter of a basket (e.g., a permeable sample holding element thereof) has a size and shape corresponding to an inner perimeter of a container. In some embodiments, a corresponding outer perimeter of a basket is one that is no more than 5% smaller in size and is substantially the same shape as the inner perimeter of a container. Such a corresponding size and shape between a container and a basket can assist in sample retention within the basket when the basket is positioned in the container (e.g., when the sample is buoyant in a fluid in the container).

Fig. 4D shows basket **418** during removal from container **402.** Because sample **410** is no longer in the staining agent solution **408,** it is no longer floating. Sample **410** is instead resting on the bottom of permeable sample holding element **420** and being retained from falling out of vertically oriented opening **430** at least in part by retaining lip **432.** In some embodiments, basket **416** is subsequently positioned in a separate container partially filled with rinsing solution (e.g., in a manner similar to the position shown in Fig. 4C for staining agent solution **408**).

In some embodiments, a receptacle or one or more components thereof (e.g., one or more components such as a container, container top, or basket) is formed by injection molding. In some embodiments, a basket is formed by injection molding. An injection molded part may be processed after injection molding (e.g., to improve hinge function of a sample submersion retention element). In some embodiments, a basket is a single continuous piece of material (e.g., plastic). Single-piece baskets can have an advantage in that they are generally inexpensive to manufacture.

A kit can be provided that includes a first receptacle that includes a container partially filled with staining agent solution and a second receptacle that includes a container partially filled with rinsing solution. The container of the first receptacle and the container of the second receptacle can be identically constructed (e.g., from the same material(s) and of the same size and shape). The container of the first receptacle may be partially filled with a volume of staining agent solution that is the same as the volume of rinsing solution partially filled in the container of the second receptacle. The kit can include a single basket (that is used for both the first and second receptacles). The single basket is provided sealed in a container of the first receptacle. In some embodiments, the container of the first receptacle is sealed initially, the container of the second receptacle is sealed initially, or both. A sample can be stained and then rinsed by disposing the sample in the single basket, disposing the single basket in the first receptacle for a period of time, removing the single basket, and disposing the single basket in the second receptacle for a second period of time (e.g., of no more than 15 seconds or no more than 10 seconds).

### Staining Agent Solutions and Rinsing Solutions

In some embodiments, a receptacle is used with a staining agent solution. In some embodiments, a staining agent solution comprises one or more fluorophores that can fluorescently tag a sample or a portion thereof when the sample is exposed to the staining agent solution for a period of time. An example of a fluorophore that may be included in a staining agent solution is acridine orange, for example acridine orange (Chemical Abstracts Service registry number (CAS) 65-61-2) or acridine orange (CAS 10127-02-3). Another example of a fluorophore that can be used in a staining agent solution is proflavine (acridine-3,6-diamine). Another example of a fluorophore that can be used in a staining agent solution is acriflavine (3,6-diamino-10-methylacridin-10-ium chloride). Other examples of fluorophores that can be used in a staining agent solution are fluorescein, eosin, rhodamine, and green fluorescent protein. A staining agent solution may comprise one or more fluorophores and one or more solvents (e.g., one or more organic solvents).

In some embodiments, a receptacle is used with a rinsing solution (e.g., provided in a container of the receptacle). A rinsing solution can be used, for example, to rinse a sample after staining. A rinsing solution may comprise water. A rinsing solution may be a saline solution (e.g., comprising one or more salts). A rinsing solution may have a neutral pH (e.g., from 6 to 8) to avoid damaging or degrading tissue being rinsed. In some embodiments, a rinsing solution comprises a buffer. In some embodiments, a rinsing agent comprises phosphate-buffered saline (PBS). In some embodiments, a rinsing solution is isotonic.

### Uses of Receptacles

Receptacles described herein are useful, for example, for staining samples with staining agent solution and/or rinsing prior to performing fluorescence microscopy on the samples. The samples may be exposed to a user during imaging with an imaging system. Examples of imaging systems useful in combination with a receptacle disclosed herein and a staining agent solution include those described in International Patent Application Nos. PCT/EP18/79894, filed October 31, 2018, and PCT/EP18/79885, filed October 31, 2018.

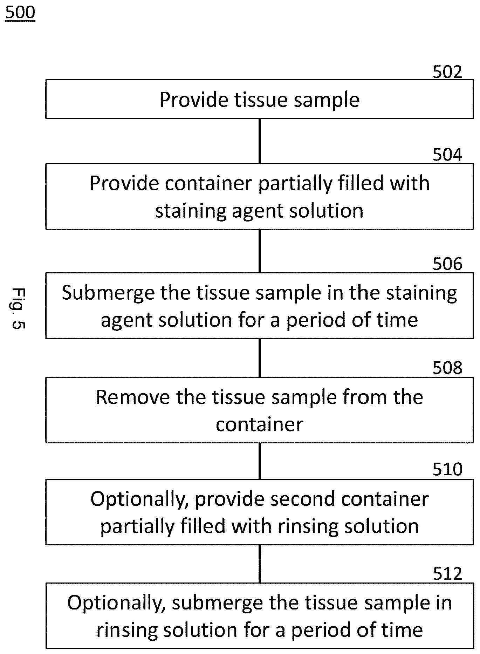

Fig. 5 is a flow diagram of illustrative method **500** of using a receptacle as disclosed herein. In step **502,** a tissue sample is provided. In step **504,** a receptacle is provided. The receptacle includes a container that is partially filled with staining agent solution. In some embodiments, the container is no more than 60% filled with staining agent solution (e.g., and no less than 10% filled). In step **506,** the sample is submerged in the staining agent solution for a period of time. The period of time may be no more than a minute. For example, the period of time may be from 1 second to 45 seconds, such as from 1 second to 15 seconds, from 15 seconds to 45 seconds, from 15 seconds to 30 seconds, or from 20 seconds to 40 seconds. A basket may be used to submerge the sample for the period of time. Submerging the sample, for example in a basket with a permeable sample holding element that includes sparse mesh or has a large porosity, can reduce or eliminate the need reposition to stain the entire surface of the sample (e.g., to a certain penetration depth). In step **508,** the tissue sample is removed from the container. The sample may be optionally rinsed after staining (e.g., using a method analogous to steps **504-508**). For example, in optional step **510,** a second container partially filled with rinsing solution is provided and in optional step **512** the tissue sample is submerged in the rinsing solution for a period of time (e.g., no more than 20 seconds or no more than 10 seconds). A single basket may be used to submerge the tissue sample in step **506** and in step **512.** For example, the tissue sample may remain at least partially within a permeable sample holding element of the basket throughout steps **506** and **512.** The sample may be imaged after staining (or after rinsing, if performed). In some embodiments, method **500** is performed in an operating room and/or intraoperatively. In some embodiments, the sample is imaged without being fixed.

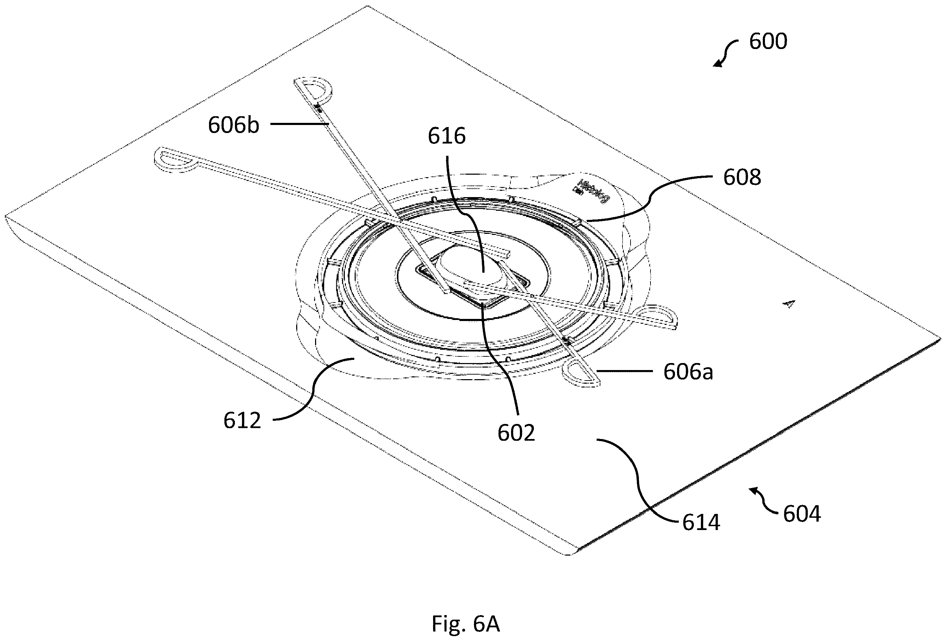

Fig. 6A shows a close up partial view of an example of an imaging system **600** with sample dish **608** disposed thereon. Tissue sample **616** (e.g., a freshly resected tissue sample) is disposed on sample dish **608.** Illustrative imaging system **600** has an exposed working area (e.g., working surface and sample) that is available to a user during imaging (i.e., the exposed working area is not covered). Tissue sample **616** can be disposed on sample dish **608** without the need for an additional sample holder. Sample dish **608** comprises an optical interface that is exposed to a user of imaging system **600** during imaging such that the user can use forceps **606a-b** (or his or her hand) to position and/or orient tissue sample **616.** Moreover, forceps **606a-b** can remain in a desired position while imaging the sample due to the exposed interface. Transparent imaging window **602** can be seen through the optical interface of sample dish **608.** Sample dish **608** is disposed between tissue sample **616** and transparent imaging window **602.** Transparent imaging window **602** allows an illumination beam and back-emitted light to pass therethrough in order to generate a fluorescence image (e.g., is at least 50% transparent to one or more wavelengths of an illumination beam and back-emitted light from one or more fluorophores in a staining agent solution).

Housing **604** comprises an imaging window support base **612** (attached to an imaging window support that holds transparent imaging window **602**) and upper working surface **614.** Imaging window support base **612** is recessed from upper working sample **614** such that when sample dish **608** is mounted onto imaging system **600,** the sample dish is positioned at or slightly below upper working surface **614.** Such an arrangement allows easy lateral access to a sample from all sides of a sample, even during imaging. Moreover, since the imaging window support base **612** is recessed from upper working surface **614** and the exposed surface of sample dish **608** is near (e.g., at or slightly below) the same plane as upper working surface **614,** tools (e.g., forceps) can easily be used and left in place during imaging (e.g., to hold a sample in a particular position). Housing **604** and transparent imaging window **602** act to isolate optics of imaging system **600** (not shown) from a tissue sample (e.g., to prevent contamination and/or damage of the optics).

A user can visually monitor and interact with tissue sample **616** during imaging with imaging system **600** because it is exposed. Moreover, imaging can be performed quite rapidly because tissue sample **616** can be easily reoriented between images. For example, a first surface of tissue sample **616** may face transparent imaging window **602** initially, such that a first image obtained by imaging system **600** corresponds to the first surface. Then, tissue sample **616** can be quickly reoriented (without needing to temporarily disassemble or open a sample holder) to image a second surface of tissue sample **616.** For example, a tissue sample may be rotated by some number of degrees (e.g., 90 degrees) or flipped over. In some examples, multiple (e.g., several or many) different region of interests of a tissue sample may be imaged (e.g., with different orientations, such as regions on opposite sides of the tissue sample) and the tissue sample thus needs to be repositioned at least once (e.g., several or many times) in order to image all of the regions of interest.

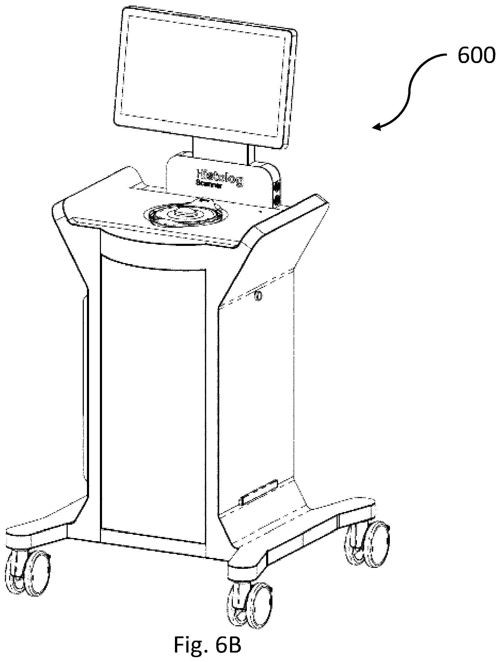

Fig. 6B shows a full view of imaging system **600.** Imaging system **600** has lockable wheels that allow it to be easily repositioned. Accordingly, imaging system **600** can be located in an operating room and can be used intraoperatively to perform assessments of freshly resected tissue.

Receptacles disclosed herein may assist in quickly staining a sample (e.g., a surface layer of the sample) sufficiently to allow fluorescence microscopy (e.g., confocal microscopy) to be performed. By enabling fast submersion of a sample into a staining agent solution (e.g., after resection), and, in some embodiments, quick transition from a staining agent solution receptacle to a rinsing solution receptacle, sample preparation time can be reduced. When used intraoperatively, shortening the length of time between tissue resection and imaging can reduce risks associated with longer operations while providing high quality imaging for intraoperative assessment. Moreover, simple receptacles as disclosed herein, that can be used without extensive preparation (e.g., decanting from larger stock solutions), can also reduce secondary risks to the operation such as spillage or breakage of materials in the operating room. In some embodiments, a receptacle can be used with a staining agent solution to sufficiently stain a sample in a period of time that is no more than 90 seconds (e.g., that is from 45 seconds to 60 seconds in length). For example, the period of time can be from when a receptacle of staining agent solution is first opened to when the sample is removed from a rinsing solution.

In some embodiments, samples to be imaged are relatively large (e.g., having dimensions up to 10 cm × 10 cm × 10 cm). For example, breast cancer tissue samples may be as large as 8-10 cm in at least one dimension. Many large breast cancer tissue samples (e.g., resected lumps) are from 30 mm to 100 mm in at least one dimension (e.g., are between 125 and 1000 cm³ in volume) and thus may have an imageable area of from 54 cm² to 600 cm² (assuming a cubic shape). In some embodiments, samples to be imaged are relatively small (e.g., having dimensions as small as 5 mm × 5 mm × 5 mm or smaller). For example, skin cancer tissue samples may be as small as 5 mm in at least one dimension and may be no larger than about 40 mm in all dimensions. Many small skin cancer tissue samples are from 5 mm to 50 mm in at least one dimension (e.g., are between 0.125 and 125 cm³ in volume) and thus may have an imageable area of from 1.5 cm² to 150 cm² (assuming a cubic shape). In some embodiments, a tissue sample has a volume of from 0.25 cm³ to 500 cm³. In some embodiments, an imaging system can image up to 18 cm² (e.g., up to 10 cm², up to 12 cm², or up to 15 cm²) in a period of time of no more than 3 minutes (e.g., no more than 2 minutes, no more than 90 seconds, or no more than one minute) for example by using a large array of micro optical elements to perform a large area parallel scan. Staining agent solutions disclosed herein are capable of sufficiently staining a tissue sample to produce high quality fluorescence images within the aforementioned short time period. In some embodiments, no more than 50 images (e.g., no more than 40 images or no more than 30 images) and thus less than 60 minutes (e.g., less than 40 minutes or less than 30 minutes) are needed to image the entire surface of a large sample. Less time (and less images) is needed to image smaller samples. In certain embodiments, a full sample surface (e.g., of a resected tissue sample comprising cancer) is imaged during an intraoperative assessment.

In some embodiments, staining and/or imaging of a stained tissue sample with an imaging system occurs intraoperatively, thereby allowing assessments of images to be made during the surgery. In some embodiments, a sample is not fixed prior to imaging. In some embodiments, staining and/or imaging of a stained tissue sample with an imaging system occurs in an operating room or a room adjacent to an operating room (e.g., a sterilizable auxiliary room). For example, an imaging system may be located in an operating room (e.g., in proximity to an operating table). By locating an imaging system in an operating room and also staining samples in the operating room, time between fresh resection of tissue and image acquisition can be reduced. Adoption of such a procedure may be aided by a staining agent solution that lacks undesirable characteristics, for example strong smell. Moreover, use of single-dose staining agent receptacles can further facilitate adoption of intraoperative in-operating-room imaging of samples in addition to reducing time spent preparing samples for imaging.

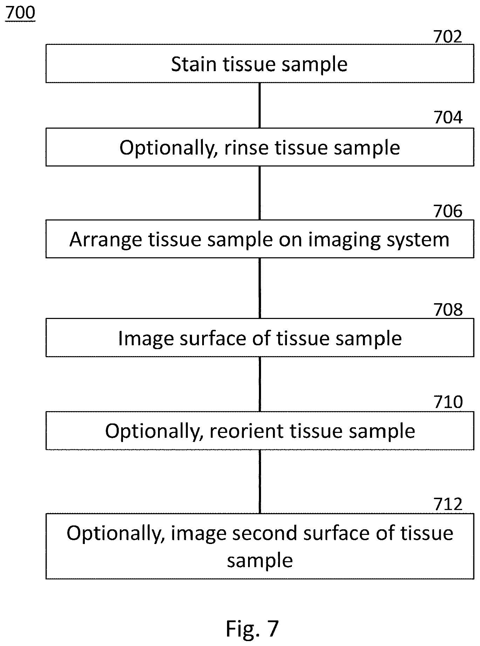

Fig. 7 is a flow diagram illustrating an exemplary method **700** of imaging a tissue sample using a staining agent solution disclosed herein. In step **702,** the tissue sample is stained. The staining agent solution used to stain the tissue sample may be, for example, a staining agent solution comprising acridine orange. The tissue sample may be stained by submerging the tissue sample in a receptacle disclosed herein that is filled with a staining agent solution. The staining agent solution may be applied to the tissue sample for a period of time of no more than 1 minute (e.g., a period of from 15 seconds to 30 seconds). In optional step **704,** excess stain is removed after staining. Excess stain may be remove by, for example, using a second receptacle comprising a rinsing solution. The tissue sample may be rinsed for a period of time from 1 second to 20 seconds in length (e.g., from 5 seconds to 15 seconds, from 1 second to 10 seconds, from 10 seconds to 20 seconds, or of no more than 10 seconds). A single basket may be used to stain the tissue sample in step **702** and rinse the tissue sample in step **704.**

In step **706,** the tissue sample is arranged on an imaging system for imaging. The imaging system may be, for example, illustrative imaging system **600** discussed with reference to Figs. 6A and 6B. In some embodiments, the tissue sample is exposed (e.g., accessible) to a user after being arranged for imaging (e.g., and throughout imaging). In step **708,** a surface of the tissue sample is imaged (e.g., in no more than three minutes). In optional step **710,** the tissue sample is reoriented to image a second surface of the sample (e.g., in order to perform a full surface mapping). In optional step **712,** the second surface of the sample is imaged. Images obtained during the method can be of higher quality because the staining agent solution does not disrupt or degrade the tissue sample.

## Claims

1. A receptacle for preparing tissue samples using fluorescent staining agent solution and/or rinsing solution, the receptacle comprising:
a container having a proximal end and a distal end, the container comprising a container opening at the proximal end and a bottom at the distal end; and
a removable basket that is positioned in the container,
wherein the basket has a proximal end and a distal end and the basket comprises a permeable sample holding element (e.g., a mesh or porous element) disposed at the distal end,
wherein the permeable sample holding element
(i) comprises one or more side walls and a bottom, and a sample submersion retention element, the sample retention element disposed between the proximal end and the distal end of the basket, wherein the sample retention element is hinged or tensioned to the permeable sample holding element to provide an opening on the proximal side of the sample holding element or wherein the permeable sample holding element has a vertical opening on a side of the sample holding element, and
(ii) is constructed to position a tissue sample in contact with a fluid disposed within the container at or near the distal end of the container when the basket is positioned in the container,
wherein the container opening has an opening inner diameter of at least 5 mm and no more than 150 mm,
wherein the container has a size and shape that defines a fillable volume, wherein the fillable volume is in a range from 5 mL to 750 mL.

2. The receptacle of claim 1, wherein the container has at least one of
(i) an inner diameter in a range from 10 mm to 100 mm and
(ii) an interior depth from the container opening to the bottom in a range from 5 mm to 120 mm.

3. The receptacle of claim 1 or claim 2, wherein the fillable volume is in a range from 5 mLto 100 mL.

4. The receptacle of claim 1 or claim 2, wherein the fillable volume is in a range from 100 mL to 750 mL.

5. The receptacle of any one of the preceding claims, wherein the receptacle is a single-dose receptacle.

6. The receptacle of any one of the preceding claims, wherein the container is partially filled with staining agent solution and the fillable volume is no more than 60% and at least 10% filled with the staining agent solution; and optionally either:
a) wherein a tissue sample having a volume of at least 2 mL and no more than 300 is disposed entirely within the container, and/or
b), wherein the tissue sample is submerged in the staining agent solution.

7. The receptacle of any one of claims 1-5, wherein the container is partially filled with rinsing solution and the fillable volume is no more than 60% and at least 10% filled with the rinsing solution; and optionally either:
a) wherein a tissue sample having a volume of at least 2 mL and no more than 300 mL is disposed entirely within the container; and/or
b) wherein the tissue sample is submerged in the rinsing solution.

8. The receptacle of claim 1, wherein the basket comprises one or more manipulation elements disposed at the proximal end of the basket; and optionally
wherein each of the one or more manipulation elements protrudes above the container opening when the basket is positioned in the container.

9. The receptacle of claim 1 or claim 8, wherein one or more of (i) the one or more side walls and (ii) the bottom is mesh or porous.

10. The receptacle of claim 1, wherein:
the sample submersion retention element is substantially parallel to the bottom of the container when the basket is positioned in the container.

11. The receptacle of any one of the preceding claims, comprising a container top sealed to the proximal end of the container at the container opening, and optionally wherein the container top is constructed to indicate to a user whether the container top has previously been removed from the container at least once.

12. A method of staining a sample, the method comprising:
providing a tissue sample;
providing a receptacle, as defined in claims 1-11 the receptacle comprising a container no more than 60% filled with staining agent solution and a removable basket;
placing the tissue sample in the basket;
positioning the basket in the container thereby submerging the tissue sample in the staining agent solution in the container for a period of time, thereby staining the tissue sample, wherein a sample submersion retention element of the basket prevents the tissue sample from surfacing in the staining agent solution during the submerging; and
removing the tissue sample from the container.

13. The method of claim 12, wherein:
a) the tissue sample is resected during an operation;
b) the method is performed intraoperatively;
c) the method further comprises:
providing a second receptacle comprising a second container no more than 60 filled with rinsing solution;
removing the basket from the receptacle;
positioning the basket in the second container thereby submerging the tissue sample in the rinsing solution; and
removing the basket from the second container after a period of time of no more than 30 seconds.
d) the method comprising unsealing a container top from the container prior to disposing the tissue sample in the container;
e) wherein the tissue sample has a volume of at least 2 mL and no more than 300 mL and the volume of staining agent solution in the container is at least 3 mL and no more than 300 mL; or
f) the method comprising imaging the tissue sample after the staining.

## Patentansprüche

1. Behälter zum Präparieren von Gewebeproben unter Verwendung einer fluoreszierenden Färbemittellösung und/oder einer Spüllösung, wobei der Behälter umfasst:
einen Container mit einem proximalen Ende und einem distalen Ende, wobei der Container eine Containeröffnung an dem proximalen Ende und einen Boden an dem distalen Ende umfasst; und
einen entfernbaren Korb, der in dem Behälter positioniert ist,
wobei der Korb ein proximales Ende und ein distales Ende aufweist und der Korb ein durchlässiges Probenhalteelement (z. B. ein Netz oder ein poröses Element) umfasst, das an dem distalen Ende angeordnet ist,
wobei das durchlässige Probenhalteelement
(i) eine oder mehrere Seitenwände und einen Boden und ein Probeneintauchrückhalteelement umfasst, wobei das Probenrückhalteelement zwischen dem proximalen Ende und dem distalen Ende des Korbes angeordnet ist, wobei das Probenrückhalteelement an das durchlässige Probenhalteelement angelenkt oder gespannt ist, um eine Öffnung an der proximalen Seite des Probenhalteelements bereitzustellen, oder wobei das durchlässige Probenhalteelement eine vertikale Öffnung an einer Seite des Probenhalteelements aufweist, und
(ii) so konstruiert ist, dass es eine Gewebeprobe in Kontakt mit einem Fluid bringt, das sich in dem Container an dem oder in der Nähe des distalen Endes des Containers befindet, wenn der Korb in dem Container positioniert ist,
wobei die Containeröffnung einen Öffnungsinnendurchmesser von mindestens 5 mm und nicht mehr als 150 mm aufweist,
wobei der Container eine Größe und Form aufweist, die ein füllbares Volumen definiert, wobei das füllbare Volumen in einem Bereich von 5 mL bis 750 mL liegt.

2. Behälter nach Anspruch 1, wobei der Behälter mindestens eines der Folgenden aufweist:
(i) einen Innendurchmesser in einem Bereich von 10 mm bis 100 mm und
(ii) eine Innentiefe von der Behälteröffnung bis zu dem Boden in einem Bereich von 5 mm bis 120 mm.

3. Behälter nach Anspruch 1 oder 2, wobei das füllbare Volumen in einem Bereich von 5 mL bis 100 mL liegt.

4. Behälter nach Anspruch 1 oder 2, wobei das füllbare Volumen in einem Bereich von 100 mL bis 750 mL liegt.

5. Behälter nach einem der vorstehenden Ansprüche, wobei der Behälter ein Einzeldosisbehälter ist.

6. Behälter nach einem der vorstehenden Ansprüche, wobei der Behälter teilweise mit Färbemittellösung gefüllt ist und das füllbare Volumen zu nicht mehr als 60 % und zu mindestens 10 % mit der Färbemittellösung gefüllt ist; und optional entweder:
a) wobei eine Gewebeprobe mit einem Volumen von mindestens 2 mL und nicht mehr als 300 vollständig innerhalb des Behälters angeordnet ist, und/oder
b) ,wobei die Gewebeprobe in die Färbemittellösung eingetaucht ist.

7. Behältnis nach einem der Ansprüche 1 bis 5, wobei der Behälter teilweise mit Spüllösung gefüllt ist und das füllbare Volumen zu nicht mehr als 60 % und zu mindestens 10 % mit der Spüllösung gefüllt ist; und optional entweder:
a) wobei eine Gewebeprobe mit einem Volumen von mindestens 2 mL und nicht mehr als 300 mL vollständig innerhalb des Containers angeordnet ist; und/oder
b) wobei die Gewebeprobe in die Spüllösung eingetaucht ist.

8. Behälter nach Anspruch 1, wobei der Korb ein oder mehrere Manipulationselemente umfasst, die an dem proximalen Ende des Korbs angeordnet sind; und optional
wobei jedes des einen oder der mehreren Manipulationselemente über die Containeröffnung hinausragt, wenn der Korb in dem Container positioniert ist.

9. Behälter nach Anspruch 1 oder 8, wobei eines oder mehrere von (i) der einen oder den mehreren Seitenwänden und (ii) der Boden ein Netz oder porös ist.

10. Behälter nach Anspruch 1, wobei:
das Probeneintauchrückhalteelement im Wesentlichen parallel zu dem Boden des Containers verläuft, wenn der Korb in dem Container positioniert ist.

11. Behälter nach einem der vorstehenden Ansprüche, umfassend einen Containerdeckel, der mit dem proximalen Ende des Containers an die Containeröffnung versiegelt ist, und wobei der Containerdeckel optional so konstruiert ist, dass er einem Benutzer angibt, ob der Behälterdeckel zuvor mindestens einmal von dem Container entfernt worden ist.

12. Verfahren zum Färben einer Probe, wobei das Verfahren umfasst:
Bereitstellen einer Gewebeprobe;
Bereitstellen eines Behälters, wie in den Ansprüchen 1-11 definiert, wobei der Behälter einen mit Färbemittellösung zu nicht mehr als 60 % gefüllten Container und einen abnehmbaren Korb umfasst;
Platzieren der Gewebeprobe in den Korb;
Positionieren des Korbes in dem Container, wodurch die Gewebeprobe in die Färbemittellösung in dem Container für eine Zeitspanne eingetaucht wird, wodurch die Gewebeprobe gefärbt wird, wobei ein Probeneintauchrückhalteelement des Korbes verhindert, dass die Gewebeprobe während des Eintauchens in die Färbemittellösung auftaucht; und
Entfernen der Gewebeprobe aus dem Behälter.

13. Verfahren nach Anspruch 12, wobei:
a) die Gewebeprobe während einer Operation reseziert wird;
b) das Verfahren intraoperativ durchgeführt wird;
c) wobei das Verfahren ferner umfasst:
Bereitstellen eines zweiten Behälters, der einen zweiten Container umfasst, der zu nicht mehr als 60 mit Spüllösung gefüllt ist;
Entfernen des Korbes von dem Behälter;
Positionieren des Korbes in dem zweiten Container, wodurch die Gewebeprobe in die Spüllösung eingetaucht wird; und
Entfernen des Korbes aus dem zweiten Container nach einer Zeitdauer von nicht mehr als 30 Sekunden.
d) das Verfahren das Entsiegeln eines Containerdeckels von dem Container vor dem Einbringen der Gewebeprobe in den Container umfasst;
e) wobei die Gewebeprobe ein Volumen von mindestens 2 mL und nicht mehr als 300 mL aufweist und das Volumen der Färbemittellösung in dem Container mindestens 3 mL und nicht mehr als 300 mL beträgt; oder
f) wobei das Verfahren das Abbilden der Gewebeprobe nach dem Färben umfasst.

## Revendications

1. Récipient de préparation d'échantillons de tissu à l'aide d'une solution d'agent de coloration fluorescent et/ou d'une solution de rinçage, le récipient comprenant :
un contenant ayant une extrémité proximale et une extrémité distale, le contenant comprenant une ouverture de récipient au niveau de l'extrémité proximale et un fond au niveau de l'extrémité distale ; et
un panier amovible qui est positionné dans le contenant,
dans lequel le panier a une extrémité proximale et une extrémité distale et le panier comprend un élément de maintien d'échantillon perméable (par exemple, un élément maillé ou poreux) disposé au niveau de l'extrémité distale,
dans lequel l'élément de maintien d'échantillon perméable
(i) comprend une ou plusieurs parois latérales et un fond, et un élément de rétention d'immersion d'échantillon, l'élément de rétention d'échantillon étant disposé entre l'extrémité proximale et l'extrémité distale du panier, dans lequel l'élément de maintien d'échantillon est articulé ou tendu à l'élément de maintien d'échantillon perméable pour fournir une ouverture sur le côté proximal de l'élément de maintien d'échantillon ou dans lequel l'élément de maintien d'échantillon perméable a une ouverture verticale sur un côté de l'élément de maintien d'échantillon, et
(ii) est construit pour positionner un échantillon de tissu en contact avec un fluide disposé à l'intérieur du contenant au niveau ou à proximité de l'extrémité distale du contenant lorsque le panier est positionné dans le contenant,
dans lequel l'ouverture de contenant a un diamètre interne d'ouverture d'au moins 5 mm et ne dépassant pas 150 mm,
dans lequel le contenant a une taille et une forme qui définissent un volume remplissable, dans lequel le volume remplissable est dans une plage allant de 5 mL à 750 mL.

2. Récipient selon la revendication 1, dans lequel le contenant a au moins l'un parmi
(i) un diamètre interne dans une plage allant de 10 mm à 100 mm et
(ii) une profondeur intérieure de l'ouverture de contenant vers le bas dans une plage de 5 mm à 120 mm.

3. Récipient selon la revendication 1 ou la revendication 2, dans lequel le volume remplissable est dans une plage de 5 mL à 100 mL.

4. Récipient selon la revendication 1 ou la revendication 2, dans lequel le volume remplissable est dans une plage de 100 mL à 750 mL.

5. Récipient selon l'une quelconque des revendications précédentes, dans lequel le récipient est un récipient à dose unique.

6. Récipient selon l'une quelconque des revendications précédentes, dans lequel le contenant est partiellement rempli d'une solution d'agent de coloration et le volume remplissable est rempli à pas plus de 60 % et à au moins 10 % de solution d'agent de coloration ; et éventuellement soit :
a) dans lequel un échantillon de tissu ayant un volume d'au moins 2 mL et ne dépassant pas 300 est disposé entièrement à l'intérieur du contenant, et/ou
b) dans lequel l'échantillon de tissu est immergé dans la solution d'agent de coloration.

7. Récipient selon l'une quelconque des revendications 1 à 5, dans lequel le contenant est partiellement rempli de solution de rinçage et le volume remplissable est rempli à pas plus de 60 % et à au moins 10 % de solution de rinçage ; et éventuellement soit :
a) dans lequel un échantillon de tissu ayant un volume d'au moins 2 mL et ne dépassant pas 300 mL est disposé entièrement à l'intérieur du contenant ; et/ou
b) dans lequel l'échantillon de tissu est immergé dans la solution de rinçage.

8. Récipient selon la revendication 1, dans lequel le panier comprend un ou plusieurs éléments de manipulation disposés au niveau de l'extrémité proximale du panier ; et éventuellement
dans lequel chacun du ou des éléments de manipulation fait saillie au-dessus de l'ouverture de contenant lorsque le panier est positionné dans le contenant.

9. Récipient selon la revendication 1 ou la revendication 8, dans lequel un ou plusieurs (i) de la ou des parois latérales et (ii) du fond sont constitués d'un élément maillé ou poreux.

10. Récipient selon la revendication 1, dans lequel :
l'élément de maintien d'immersion d'échantillon est sensiblement parallèle au fond du contenant lorsque le panier est positionné dans le contenant.

11. Récipient selon l'une quelconque des revendications précédentes, comprenant un dessus de contenant scellé à l'extrémité proximale du contenant au niveau de l'ouverture de contenant, et éventuellement dans lequel le dessus de contenant est construit pour indiquer à un utilisateur si le dessus de contenant a été préalablement retiré du contenant au moins une fois.

12. Procédé de coloration d'un échantillon, le procédé comprenant :
la fourniture d'un échantillon de tissu ;
la fourniture d'un récipient, tel que défini dans les revendications 1 à 11, le récipient comprenant un contenant rempli à pas plus de 60 % de solution d'agent de coloration et un panier amovible ;
le placement de l'échantillon de tissu dans le panier ;
le positionnement du panier dans le contenant immergeant ainsi l'échantillon de tissu dans la solution d'agent de coloration dans le contenant pendant une période de temps, colorant ainsi l'échantillon de tissu, dans lequel un élément de maintien d'immersion d'échantillon du panier empêche l'échantillon de tissu d'émersion dans la solution d'agent de coloration pendant l'immersion ; et
le retrait de l'échantillon de tissu du contenant.

13. Procédé selon la revendication 12, dans lequel :
a) l'échantillon de tissu est réséqué pendant une opération ;
b) le procédé est réalisé de manière intraopérationnelle ;
c) le procédé comprend en outre :
la fourniture d'un second récipient comprenant un second contenant rempli à pas plus de 60 de solution de rinçage ;
le retrait du panier du récipient ;
le positionnement du panier dans le second contenant immergeant ainsi l'échantillon de tissu dans la solution de rinçage ; et
le retrait du panier du second contenant après une période de temps ne dépassant pas 30 secondes.
d) le procédé comprenant le déscellage d'un dessus de contenant du contenant avant de disposer l'échantillon de tissu dans le contenant ;
e) dans lequel l'échantillon de tissu a un volume d'au moins 2 mL et ne dépassant pas 300 mL et le volume de solution d'agent de coloration dans le contenant est d'au moins 3 mL et ne dépassant pas 300 mL ; ou
f) le procédé comprenant l'imagerie de l'échantillon de tissu après la coloration.
